# EUROPÄISCHE PATENTANMELDUNG

(11) **EP 4 382 193 A1**
(43) Veröffentlichungstag der Anmeldung: **12.06.2024**
(21) Anmeldenummer: 23213923.8
(22) Anmeldetag: 04.12.2023
(51) Int. Cl.: B01D 53/04

(54) **ADSORPTIONSVORRICHTUNG**

(30) Priorität: 09.12.2022 DE 102022132800
(71) Anmelder: Vaillant GmbH, 42859 Remscheid NRW (DE)
(72) Erfinder: Krampe-Zadler, Christof, 44628 Herne (DE); Lingk, Tobias, 42799 Leichlingen (DE); Spahn, Hans-Josef, 40699 Erkrath (DE)
(74) Vertreter: Popp, Carsten

(57) **Zusammenfassung**

Adsorptionsvorrichtung (1) zur Sicherung einer Wärmepumpe oder einer Kühl- oder Gefriereinrichtung, die mit einem entzündlichen oder gefährlichen Kältemittel betrieben wird, und die in einem Gehäuse installiert ist, wobei das Gehäuse geeignet für eine Aufstellung innerhalb eines Gebäudes ist, die Adsorptionsvorrichtung aufweisend mindestens einen Auslass (3) für Luft, der mit der Umgebung des Gehäuses verbunden ist, mindestens ein Festbett, wobei die Adsorptionsvorrichtung (1) aus Teiladsorbern (4, 6, 8, 10) gebildet wird, eine Vielzahl von Einlässen (2) für ein Luft-Gasgemisch aufweist, die mit dem Inneren des Gehäuses verbunden sind, wobei die einzelnen Teile entweder durch Strukturierungen voneinander abgetrennt sind oder aus miteinander verbundenen Einzeladsorbern gebildet sind, die Teiladsorber (4, 6, 8, 10) miteinander hydraulisch verbunden (5, 7, 9) sind.

## Beschreibung

Die Erfindung betrifft eine Adsorptionsvorrichtung, die als Sicherungseinrichtung für den Fall vorgesehen wird, dass irreguläre Zustände in Kältekreisen auftreten, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Der aus dem Stand der Technik bekannte Adsorber wird hierbei in geeigneter Weise partitioniert, entweder durch Aufteilung in Teiladsorber oder durch Strukturelemente oder beides.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel die Ozonschicht schädigen, zur Klimaerwärmung führen, und dass ihre sicherheitstechnische Unbedenklichkeit zu konstruktiven Unachtsamkeiten führte. Bis zu 70 % des Umsatzes an Kältemittel entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014. Als Folge werden gerne brennbare Kältemittel verwendet, die klimaschädlichen Nachteile nicht aufweisen, dies sind vor allem R290 (Propan), R600a und R1270. Diese haben den weiteren Vorteil besonders hoher erreichbarer Wirkungsgrade, es müssen aber wegen der Brennbarkeit Vorkehrungen hinsichtlich der Sicherheit gegenüber Notfällen getroffen werden. Dies betrifft vor allem Leckagen nach Betriebsstörungen.

Die auftretenden Probleme bei der Sicherheitsauslegung solcher Anlagen werden in der EP 4 008 979 A1 anschaulich und ausführlich beschrieben. In vielen Fällen kommen daher Adsorber mit Aktivkohle oder anderen geeigneten Adsorbenzien zum Einsatz. Sofern das leckagebedingt austretende Kältemittel oder Arbeitsfluid schwerer als Luft ist, sinkt es im Wärmepumpenbehälter zunächst nach unten, wo typischerweise auch die Einlassöffnungen für Adsorber angeordnet sind. Ansteigender Druck im Wärmepumpenbehälter aufgrund des zusätzlichen, unter Druck ausströmenden Kältemittels bewirkt dann eine Strömung durch den Adsorber, die auch von Lüftern oder anderen Strömungsförderern unterstützt werden kann. Im Adsorber wird dann das Kältemittel gebunden und kann nicht in den Aufstellungsraum austreten.

Die DE 195 25 064 C1 beschreibt eine Kältemaschine mit einem gasdicht ausgebildeten Gehäuse und einem Auslass, der mit dem Gehäuse verbunden ist und der ein das Kältemittel der Kältemaschine sorbierenden Stoff enthält. Im Falle einer Leckage kann das Kältemittel sorbiert werden, was aber voraussetzt, dass innerhalb des Gehäuses ein Überdruck entsteht und die mit Kältemittel kontaminierte Luft aus dem Auslass heraustreibt. Bei Kältemitteln, die unter Druck im Kältekreislauf stehen, ist dies üblicherweise der Fall und es ist daher nicht nötig, eine Öffnung für zuströmende Luft oder eine Zwangsbelüftung für eine Spülung im gasdicht ausgebildeten Gehäuse vorzusehen.

Die DE 10 2018 109 646 A1 weist ebenfalls mindestens einen Verdichter für ein gefährliches Arbeitsfluid, mindestens eine Entspannungseinrichtung für Arbeitsfluid, mindestens zwei Wärmeübertrager für Arbeitsfluid mit jeweils mindestens zwei Anschlüssen für Wärmeüberträgerfluide, ein geschlossenes und druckdichtes Gehäuse, welches alle am geschlossenen Arbeitsfluidumlauf angeschlossenen Einrichtungen umfasst, weitere Einrichtungen umfassen kann, und mit einem Adsorptionsmittel ausgekleidet ist, welches in der Lage ist, Arbeitsfluid zu adsorbieren, mindestens eine weitere Sorptionseinrichtung, mit der das gesamte Arbeitsfluid bei Normalbedingungen adsorbiert werden kann, und mindestens eine Sicherheits-Kältemittelablass-Einrichtung auf. Der verwendete Adsorber umschließt das Gehäuse des Kältekreises also vollständig.

Die DE 10 2019 118 984 A1 betrifft eine Diffusionssperre für einen Adsorber für eine Wärmepumpe mit einem Kältekreis wie in der DE 10 2018 109 646 A1 mit mindestens einem Sorptionskanal mit einem Adsorber, der von Gas, welches das Arbeitsfluid enthalten kann, durchströmt werden kann, wobei der Adsorber einen Hauptadsorber enthält und das Arbeitsfluid vom Haupt¬adsorber aufgenommen durchströmt werden kann. Der Sorptionskanal schließt direkt an das Gehäuse an und ist zu ihm ebenso wie zur Umgebung des Gehäuses für Gas offen, wobei der Adsorber im Sorptionskanal zusätzlich zu dem Hauptadsorber Schutzschichten auf¬weist, die so gestaltet sind, dass das Adsorptionsmittel im Hauptadsorber vor Kontamination geschützt ist, und der Adsorber im Sorptionskanal aus einem Hauptadsorber aus Aktivkohle sowohl in Strömungsrichtung vor als auch nach dem Hauptadsorber aus jeweils mindestens einer Schutzschicht gebildet ist. Somit ist vorgesehen, den Sorptionskanal zu verlängern und an beiden Seiten zusätzliche Schutzschichten vorzusehen.

Die DE 10 2011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess wird ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel werden Aktivkohle, Zeolith, auch in Kombination mit Imidazol oder Phosphaten, ferner CuBTC vorgeschlagen, das Adsorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes durchgeführt werden.

Die EP 3 106 780 A1 beschreibt eine Wärmepumpenanlage, die in einem mit einem Bindemittel ausgekleideten, luftdichten Gehäuse untergebracht ist. Innerhalb dieses Gehäuses kann eine Adsorptionseinheit mit einer Zwangslüftung angeordnet sein, die im Umluftbetrieb die Luft im Gehäuse reinigt. Dieser Umluftbetrieb kann kontinuierlich oder nur im Störfall oder in regelmäßigen Intervallen erfolgen.

Hinzu kommt ein grundsätzlicher Zielkonflikt bei der Verwendung von Adsorbern und Bindemitteln. Sofern Arbeitsfluid aus einer kleinen Leckage austritt, soll ein Bindemittel, sei es ein Adsorptionsmittel oder ein chemisches Bindemittel, auch bei kleinen Partialdrücken in der Lage sein, das gesamte Arbeitsfluid aufzunehmen. Dies geschieht am besten in einer langsamen Durchströmung durch ein feinverteiltes Medium. Im Falle eines denkbaren, wenn auch sehr seltenen Abrisses einer Arbeitsfluid-führenden Leitung wird jedoch in sehr kurzer Zeit eine große Menge Arbeitsfluid unter hohem Druck freigesetzt, welche das zumeist druckdichte Gehäuse schlagartig unter Druck setzt. Bei Versuchen ergaben sich Spitzendruckwerte von bis zu 25 hPa, was zu Verformungen typischer Bauformen und nachfolgendem Austritt von Arbeitsfluid führen würde.

In solchen Fällen muss nicht nur das gesamte Arbeitsfluid aufgenommen werden, wie es im Stand der Technik seit langem bekannt ist, sondern es muss auch schnell zu einer Druckentlastung kommen. Geschlossene Vorrichtungen mit einem feinverteilten Medium, das einem Arbeitsfluid beim Einströmen oder beim Durchströmen einen hohen Strömungswiderstand entgegensetzen würde, wären nicht geeignet, die erforderliche schnelle Druckentlastung herbeizuführen.

Aber auch herkömmliche Vorrichtungen, die einen durchströmten Adsorber oder einen mit einem anderen Bindemittel gefüllten Behälter vorsehen, in dem ein entweichendes Arbeitsfluid-Luftgemisch gereinigt wird, bevor es in den Aufstellungsraum entweichen kann, sind problematisch. So wäre die Summe der Einzeldruckverluste, die sich aus dem Eintrittsdruckverlust, dem des Sorptionsbettes und dem Austrittsdruckverlust ergibt, immer noch so hoch, dass es eines erheblichen Überdruckes im Gehäuse bedürfte, um schnell genügend viel Arbeitsfluid-Luftgemisch durch eine solche Vorrichtung hindurchzutreiben, um auf diese Weise ohne zusätzlichen Lüfter einen schnell entstehenden Überdruck abzubauen. Dieser Überdruck ist aber gerade nicht erwünscht und soll möglichst nicht erst entstehen, darf also auch nicht erforderlich sein, um ihn selbst schnell abzubauen. Hierdurch entsteht ein innerer Zielkonflikt.

Ein weiterer Zielkonflikt entsteht durch den Platzbedarf in Verbindung mit der Weglänge, die leckagebedingt ausgetretenes Arbeitsfluid bis zum Adsorber zurücklegen muss. Diese Weglänge sollte möglichst kurz sein, aber da der Ort der Leckage vorab nicht bekannt ist, kann man den benötigten Adsorber nicht als Kompaktgerät direkt neben die Austrittsstelle platzieren, sondern der Adsorber muss praktisch überall in der Nähe sein. Aus dieser Forderung würde sich ein Adsorber mit einer sehr großen Eintrittsfläche ergeben, bei vorgegebenen Volumen ergäbe das eine entsprechend geringe Betttiefe.

Aus den typischen Aufstellungsbedingungen folgt, dass die Austrittsfläche des Adsorbers aus dem Gehäuse nicht automatisch der Eintrittsfläche in den Adsorber gegenüberliegend gewählt werden kann, die aufstellungsoptimale Strömung durch den Adsorber verläuft also im Allgemeinen nicht symmetrisch. Damit stellt sich im Adsorber das Problem des hydraulischen Abgleichs, es müssen alle adsorptiv wirkenden Anteile gleich gut durchströmt werden. Es müssen sowohl hydraulische Kurzschlussströme als auch undurchströmte Toträume konstruktiv vermieden werden.

Für ein lineares gestrecktes und beidseitig geöffnetes Sorptionsbett mit konstantem Querschnitt über das Sorptionsbett und gleicher Ein- wie Austrittsfläche ergibt sich ein ungünstiges Verhältnis zwischen ein- und ausgangsseitigem Strömungswiderstand. Im Falle einer Leckage des Kältekreises tritt je nach Leckageart ein hoher Volumenstrom von Kältemittel in das Gehäuse der Wärmepumpe ein und führt aufgrund des vorhandenen Strömungswiederstands des beidseitig geöffneten Sorptionsbettes zu einem Druckaufbau innerhalb des Wärmepumpengehäuses.

Der Strömungswiderstand des Sorptionsbettes ist ohne Beachtung der sorptiven Vorgänge von den geometrischen Eigenschaften des Sorptionsbettes abhängig, der Strömungswiderstand hängt dabei im Allgemeinen nichtlinear zur Strömungsgeschwindigkeit ab. Durch die sorptiven Wechselwirkung des austretenden Kältemittels mit dem Sorptionsbett entsteht eine Durchbruchsfront von beladenem Sorptionsmaterial entlang der Strömungsrichtung durch das Sorptionsbett, welche sich mit einer bestimmten Geschwindigkeit durch das Sorptionsbett in Abhängigkeit des Volumenstroms, der Zusammensetzung des in das Sorptionsbett einströmenden Gases und der Geometrie des Sorptionsbettes ergibt.

Für ein nicht mit dem Sorptionsbett interagierendes Gas ergibt sich ein konstanter Strömungswiderstand über das Sorptionsbett, währenddessen sich für ein aktiv interagierendes Gas der unbeladene Teil des Sorptionsbettes mit geringer Impedanz darstellt und der beladene Teil sich als ein Strömungswiderstand äquivalent zu einem nicht interagierenden Sorptionsbett darstellt. Mit in Strömungsrichtung fortschreitender Beladung würde der Strömungswiderstand für die aktive Paarung also bei konstanter Anströmung weiter zunehmen. Das kann zu einem weiteren ungewollten Druckanstieg im Wärmepumpengehäuse führen und zu einer zeitlichen Verlangsamung des Adsorptionsvorganges.

Dadurch, dass das Sorptionsbett nach beiden Seiten offen ist, also auf der einen Seite hin zum Wärmepumpengehäuse und zur anderen Seite zum Aufstellungsraum, können Pendelströmungen entstehen. Der Grund hierfür sind die Abwärme des Verdichters, die zu einem Temperaturgradienten zwischen dem Innenraum des Wärmepumpengehäuses und dem Aufstellungsraum führt, ferner die Abwärme der Wärmetauscher und der Verrohrung. Weitere Gründe für Pendelströmungen sind allgemeine Luftdruckschwankungen. Diese Pendelströmungen können zu einem Eintrag von Feuchte und VOCs (Volatile Organic Compounds) in das Sorptionsbett aus der Luft des Aufstellungsraums führen. Nach einem Fehlerfall und einem teilbeladenen Sorptionsbett kann im Extremfall der Beladungszustand des Sorptionsbettes durch die Pendelströmung beeinflusst werden, was zu einem unstetigen Konzentrationsübergang von beladenem Sorptionsbett zum Aufstellungsraum hinsichtlich des Kältemittelpartialdrucks führen kann. Für diesen Fall muss die Lauflänge des Sorptionsbetts überproportional verlängert werden.

Solche Pendelströmungen werden durch die Impedanz erfasst, die eine komplexe Größe des Strömungswiderstandes für einen nichtwechselwirkenden Gasstrom und einen wechselwirkenden Gasstrom mit dem Sorptionsbett ist. Dieser Strömungswiderstand darf nicht zu einem Druckanstieg von über 50 kPa führen.

Die Aufgabe der Erfindung ist daher, eine verbesserte Vorrichtung für einen Adsorber bereitzustellen, welche die dargestellten Probleme besser löst und die Nachteile nicht mehr aufweist.

Die Erfindung löst die Aufgabe durch eine Adsorptionsvorrichtung zur Sicherung einer Wärmepumpe oder einer Kühl- oder Gefriereinrichtung,
- die mit einem entzündlichen oder gefährlichen Kältemittel betrieben wird,
- und die in einem Gehäuse installiert ist,
- wobei das Gehäuse geeignet für eine Aufstellung innerhalb eines Gebäudes ist,
   die Adsorptionsvorrichtung aufweisend
- mindestens einen Auslass für Luft, der mit der Umgebung des Gehäuses verbunden ist,
- mindestens ein Festbett,
   wobei
- eine Vielzahl von Einlässen für ein Luft-Gasgemisch, die mit dem Inneren des Gehäuses verbunden sind, vorgesehen wird,
- die Adsorptionsvorrichtung aus Teiladsorbern gebildet wird, wobei die einzelnen Teile entweder durch Strukturierungen voneinander abgetrennt sind oder aus miteinander verbundenen Einzeladsorbern gebildet sind,
- mindestens eine verschließbare Einfüllöffnung und mindestens eine verschließbare Auslassöffnung für Adsorptionsmittel für jeden Teiladsorber vorgesehen sind,
- die Teiladsorber miteinander hydraulisch verbunden sind.

In der Regel sind also mindestens eine verschließbare Einfüllöffnung und mindestens eine verschließbare Auslassöffnung für Adsorptionsmittel für jeden Teiladsorber vorgesehen. Alternativ kann das Adsorptionsmittel aber auch bei der Fertigung eingebracht werden und derjenige Teiladsorber danach verschlossen werden.

In weiteren Ausgestaltungen ist vorgesehen, dass das Verhältnis von Gaseintrittsfläche zu Luftaustrittsfläche zu der Adsorptionsvorrichtung größer als 1, noch besser größer als 10 und am Besten größer als 100 ist.

Das Gehäuse kann dabei ein Kapselgehäuse eines Kältekreises in einer Wärmepumpe oder ein Gehäuse, in welchem eine Wärmepumpe oder eine Kühl-Gefriereinrichtung installiert ist, sein. Es kann sich dabei auch um mehrere ineinander geschachtelte Gehäuse handeln.

In einer Ausgestaltung ist vorgesehen, dass die Teiladsorber jeder für sich an den Innenseiten des Gehäuses angeordnet sind und das Innere nahezu vollständig umschließen, wobei sie über hydraulische Verbindungen miteinander verbunden sind. Um eine besonders große Oberfläche für den Gaseintritt bereitzustellen, können die Teiladsorber, die den Gaseinlass bilden, auch als Faltenfilter ausgebildet sein. Diese Faltenfilter können mit Adsorptionsmittel belegt sein. Dieselbe Maßnahme kann für den Gasauslass und den entsprechenden Teiladsorber vorgenommen werden, wobei der Teiladsorber, der den Gasauslass bildet, auch dazu eingerichtet sein, Schadstoffe und Wasserdampf aus dem Umgebungsraum abzuscheiden.

Insofern der Adsorber aus mehreren Teiladsorbern gebildet wird, können diese hintereinander oder parallel zueinander verschaltet werden. Es ist auf diese Weise möglich, den Bauraum innerhalb des Wärmepumpengehäuses optimal zu nutzen, da alle Teiladsorber verschiedene Geometrien haben können, wobei sie durch Rohrleitungen und/oder gasführende Geometrien miteinander hydraulisch verbunden sind. Die Teiladsorber können dabei auch an den Seitenwänden oder die Ecken um das Kältekreisgehäuse bzw. das Wärmepumpengehäuse herumgeführt werden.

Weitere Ausgestaltungen betreffen die Adsorptionsmittel. Diese sind einerseits auf das Kältemittel abzustimmen, andererseits auf die möglichen Kontaminationen des Aufstellungsraums. So kann vorgesehen werden, dass am Auslass der Adsorbervorrichtung ein Sorptionsmittel für Kontamination aus dem Aufstellungsraum und am Gaseinlass der Adsorptionsvorrichtung Adsorptionsmittel für austretendes Kältemittel eingesetzt wird. Die Festbetten können mit Schüttungen von Formkörperpellets, von gebrochenen Gut, mit Wabenkörpern oder mit porösen, mit Aktivkohle belegten Schaumstoffen oder auch mit sonstigen Schüttgütern befüllt sein.

In Ausgestaltungen ist vorgesehen, dass das Adsorptionsmittel eine Schüttung aus Aktivkohlepartikeln ist oder enthält. Vorzugsweise wird vorgesehen, dass die Aktivkohlepartikel ein Granulat oder ein Extrudat sind und Partikelabmessungen zwischen 0,1 und 15 Millimetern, vorzugsweise zwischen 1 und 5 Millimetern aufweisen. Das entspricht üblichen zylindrischen oder runden Pellets.

In anderen Ausgestaltungen ist vorgesehen, dass das Adsorptionsmittel offenporigen mit Aktivkohle belegten Polyurethanschaumstoff enthält. Vorzugsweise ist vorgesehen, dass der offenporige, mit Aktivkohle belegte Polyurethanschaumstoff in Form von Flächenelementen eingebracht wird. Solche Flächenelemente sind im Handel gut erhältlich, beispielsweise mit 21 Millimeter Dicke, einem Flächengewicht von 1,3 kg/m² bei einer Aktivkohleauflage von 0,55 kg/m². Sie können aber auch als Formteile passend für den Adsorber hergestellt werden und der Strömungswiderstand ist über die Poren einstellbar. Es ist auf diese Weise also möglich, längere Strecken zwischen Einlass und Auslass mit solchem Schaumstoff zu versehen, der einen geringeren Druckverlust erzeugt, als für kürzere Strecken.

Es können in Ausgestaltungen auch sowohl Flächenelemente aus offenporigem, mit Aktivkohle belegtem Polyurethanschaumstoff als auch eine Schüttung aus Aktivkohlepellets vorgesehen werden, wobei die Poren des offenporigen, mit Aktivkohle belegten Polyurethanschaumstoffs kleiner ausgebildet sind als die Aktivkohlepellets der Schüttung, damit die Poren nicht verstopft werden. Es ist jedoch von Vorteil, wenn die Pellets in die Schaumstoffporen etwas einsinken, weil dadurch die Randgängigkeit der Schüttung unterbunden wird und die Strömung dadurch insgesamt vergleichmäßigt wird.

Entscheidend für das Zusammenwirken der Teiladsorber als Adsorptionsvorrichtung ist, dass die Teiladsorber hydraulisch miteinander verbunden sind und strömungstechnisch ein hydraulischer Abgleich vorgenommen ist. Das kann dadurch erreicht werden, dass außer dem Gaseinlass auch die verschiedenen Luftauslässe hydraulisch miteinander verbunden werden, oder auch zwischen den Teiladsorbern hydraulische Verbindungen vorgesehen werden.

Die Aufgabe der Erfindung ist auch, ein verbessertes Adsorptionsverfahren für ein System von Adsorbern bereitzustellen, um die dargestellten Probleme besser zu lösen und die bekannten Nachteile zu vermeiden.

Die Erfindung löst die Aufgabe durch ein Verfahren zur Abscheidung von entzündlichem oder gefährlichem Kältemittel, wobei das Kältemittel unbeabsichtigt und leckagebedingt aus dem geschlossenen Kältekreis ausgetreten und in das Innere eines in einem Gebäude aufgestellten Gehäuses einer Wärmepumpe oder in das Innere einer in einem Gebäude aufgestellten Maschine einer Kühl- und Gefriereinrichtung gelangt ist, mittels einer Adsorptionsvorrichtung, welche aufweist
- mindestens einen Auslass für Luft, der mit der Umgebung des Gehäuses verbunden ist,
- mindestens ein Festbett,
- eine Vielzahl von Einlässen für ein Luft-Gasgemisch, die mit dem Inneren des Gehäuses verbunden sind, vorgesehen wird,
- die Adsorptionsvorrichtung aus Teiladsorbern gebildet wird, wobei die einzelnen Teile entweder durch Strukturierungen voneinander abgetrennt sind oder aus miteinander verbundenen Einzeladsorbern gebildet sind,
- mindestens eine verschließbare Einfüllöffnung und mindestens eine verschließbare Auslassöffnung für Adsorptionsmittel für jeden Teiladsorber vorgesehen sind,
- die Teiladsorber miteinander hydraulisch verbunden sind, wobei
- das leckagebedingt kontaminierte Luft-Kältemittelgemisch von mindestens einem als Faltenfilter ausgebildeten Gaseinlass aufgenommen wird,
- das aufgenommene Luft-Kältemittelgemisch hydraulisch abgeglichen in Teiladsorber verteilt wird, welche hintereinander oder parallel zueinander verschaltet werden und dort das Kältemittel adsorptiv abgeschieden wird,
- nachfolgend das gereinigte Gas über einen Gasauslass in den Aufstellungsraum oder ins Freie geleitet wird.

Der Vorteil des Verfahrens ist, dass man in den Teiladsorbern unterschiedliche Adsorptionsmittel verwenden kann, um unterschiedliche Stoffe abzuscheiden. Das betrifft vor allem den Auslass. In einer Ausgestaltung des Verfahrens ist daher vorgesehen, dass das Adsorptionsmittel des Teiladsorbers am Auslass des Adsorbers dazu verwendet wird, Luftschadstoffe und Wasserdampf aus der Umgebungsluft im Falle von Rückströmung oder Rückdiffusion abzuscheiden.

Die Erfindung wird nachfolgend anhand von 4 Prinzipskizzen näher erläutert. Hierbei zeigen:
Fig. 1 eine Verschaltungsübersicht der einzelnen Teiladsorber,
Fig. 2 den Gaseinlassbereich einer Adsorptionsvorrichtung 1 von oben,
Fig. 3 den Gaseinlassbereich einer Adsorptionsvorrichtung 1 seitlich,
Fig. 4 ein Wärmepumpengehäuse mit eine Vielzahl von Teiladsorbern.

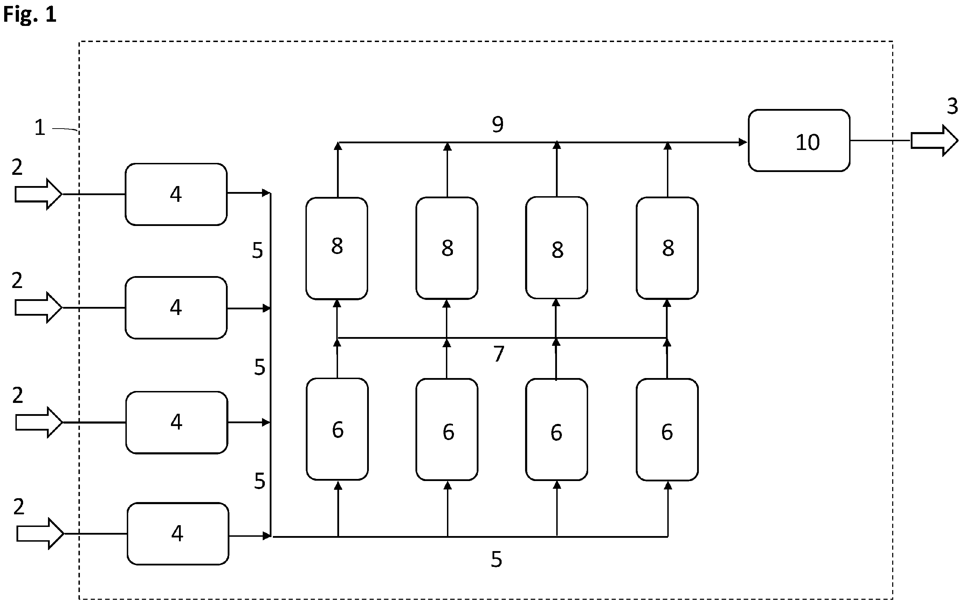

Fig. 1 zeigt eine Verschaltungsübersicht der einzelnen Teiladsorber. Hierbei wird vereinfachend angenommen, dass die einzelnen Teiladsorber, die zusammen die Adsorptionsvorrichtung 1 bilden, über Rohrleitungen miteinander verbunden sind. Im Falle einer Leckage tritt das Gas-Luftgemisch, was sich im Gehäuse bildet, über eine Vielzahl von im Gas-Luft-Einlässen 2 in die Teiladsorber 4 ein. Um Strahlströmungen zu verhindern, die einen partiellen Durchbruch des Sorptionsbettes verursachen könnten, oder diese wenigstens zu brechen, wird hier als Adsorberfüllung bevorzugt ein offenporiger Schaumstoff oder eine Wabenstruktur verwendet, deren Oberflächen mit Aktivkohle oder eines anderen zur Aufnahme des jeweiligen Kältemittels geeigneten Sorptionsmittels belegt sind. Von dort aus wird die Luft-Gasströmung über die Verteilerleitung 5 auf die parallel geschalteten Teiladsorber 6 aufgeteilt, wobei nachfolgend der wesentliche Teil der Adsorption stattfindet. Danach treffen sich die Ausgänge der Teiladsorber 6 in der Ausgleichsleitung 7, wo ein Druckausgleich und eine Durchmischung stattfinden. Auch eine Messstelle kann hier angeordnet werden, um eine Durchbruchszone zu messen. Von dort aus treten die Gasströme in die Teiladsorber 8 ein, die als Nachreinigung dienen. In der Sammelleitung 9 werden die Luftströme gesammelt und über den Teiladsorber 10, der auch dem Schutz von Kontamination aus dem Aufstellraum dient, durch den Luft-Auslass 3 nach außen geleitet. Die Teiladsorber 6 und 8 können sich dabei aus unterschiedlichen Adsorberformen und Größen zusammensetzen, auch ist die Anzahl beliebig. Wichtig ist dabei aber bei jeder Verschaltungsart der hydraulische Abgleich, um ungleichförmige Belastung zu vermeiden.

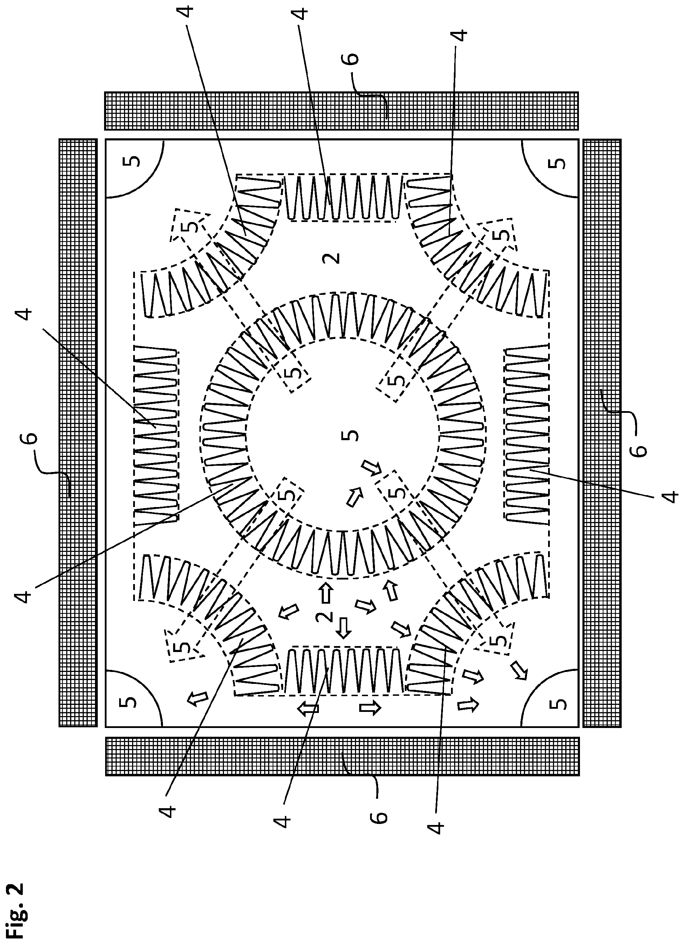

Fig. 2 zeigt den Gaseinlassbereich einer Adsorptionsvorrichtung 1 von oben und/oder von unten. Um die Einlassfläche zu vergrößern werden hier als Teiladsorber 4 eine Vielzahl von Faltenfiltern verwendet. In der Fig. 2 sind diese überzeichnet dargestellt, praktisch entsprechen sie üblichen Luftfiltern, wie sie etwa in KFZ oder Klimaanlagen üblich sind. Dargestellt sind die Bauformen Rundfilter, Flächenfilter und Rundfilter mit Viertelkreisquerschnitt an den Ecken. Im Falle einer Leckage, dargestellt ist ein Austritt im linken Teil der Fig. 2, tritt das Gas über die Gaseinlässe 2 in die Teiladsorber 4, die als Faltenfilter mit Aktivkohlebelegung ausgeführt sind, ein. Die Ausgänge der Teiladsorber 4 sind über das System der Verbindungsleitungen 5 alle miteinander verbunden und befinden sich im Inneren des Wärmepumpengehäuses.

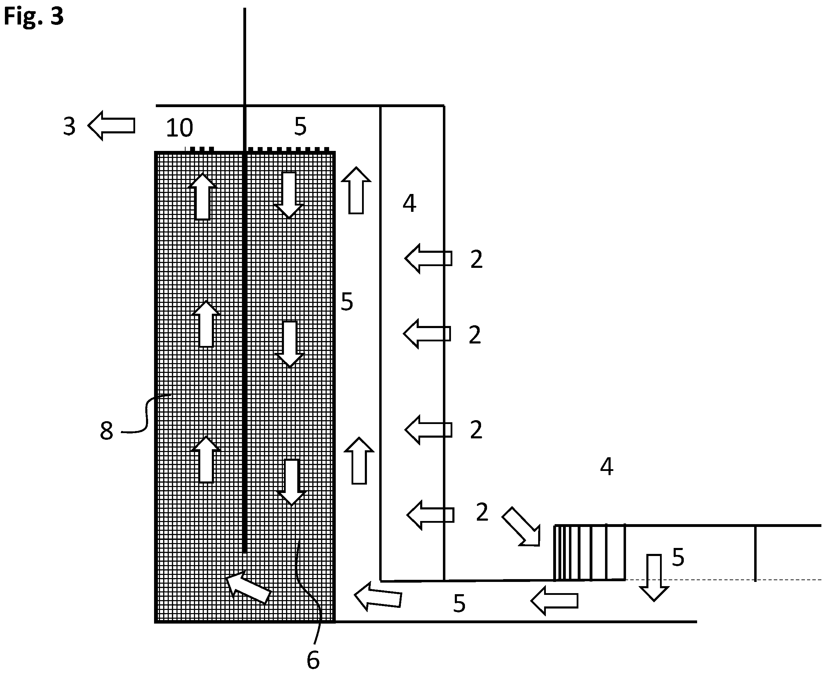

Fig. 3 zeigt den Gaseinlassbereich einer Adsorptionsvorrichtung 1 seitlich auf der linken Seite. Das Leckagegas tritt in die Teiladsorber 4 ein und gelangt von dort in das System der Verbindungsleitungen 5. Von dort tritt es in die Teiladsorber 6 ein, wird dort adsorptiv gebunden und nach einer Umlenkung tritt es in die Teiladsorber 8 ein. Die Verbindungsleitungen 7 sind nicht gezeigt, befinden sich aber in den Ecken der Teiladsorber 6 und 8. Nach der adsorptiven Feinreinigung in den Teiladsorbern 8 wird das gereinigte Gas in den Teiladsorber 10 und von da zum Auslass 3 geleitet.

Der Flächenbedarf der Eintrittsfläche der Teiladsorber 4 wird am Beispiel des Kältemittels R290 näher gezeigt wird. Pro Kilogramm Inventar R290 im betreffenden Kältekreislauf beträgt der Öffnungsquerschnitt zum Gehäuse, in welchem sich der Kältekreis befindet, zwischen 50 und 10⁵ cm²/kg _{R290} und die Bettlauflänge sollte zwischen 1 und 100 cm/ kg _{R290} liegen. Die Menge an Adsorptionsmittel, welche in der gesamten Adsorptionsvorrichtung unterzubringen ist, ergibt sich daher zu einer Mindestbeladungskapazität des Sorptionsmittels von 2,5 Gew.%/kg bei 100% Partialdruck des Kältemittels R290..

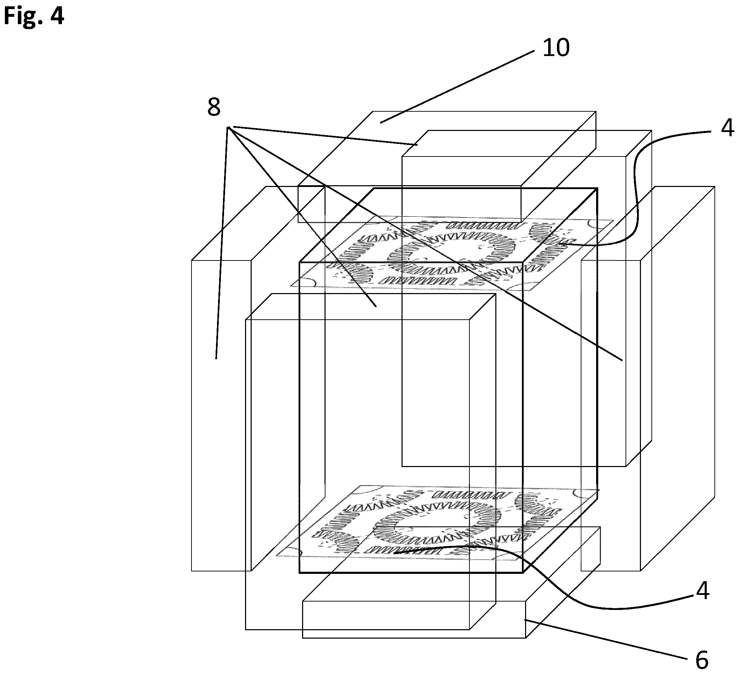

Fig. 4 zeigt ein Wärmepumpengehäuse, bei dem eine Vielzahl Teiladsorber 4 unten als Gas-Luft-Einlass und eine weitere Vielzahl oben angeordnet ist. Aus Gründen der Übersichtlichkeit wird auf die Darstellung der seitlichen Teiladsorber 4 auf den übrigen Innenseiten verzichtet. Außen am Wärmepumpengehäuse an vier Seiten die Teiladsorber 6 angeschlossen, die wiederum oben an den Teiladsorber 10 angeschlossen sind, der den Luftauslass 3 enthält.

### Bezugszeichenliste

- 1: Adsorptionsvorrichtung
- 2: Gas-Luft-Einlass
- 3: Luft-Auslass
- 4: Teiladsorber
- 5: Verteilerleitung
- 6: Teiladsorber
- 7: Ausgleichsleitung
- 8: Teiladsorber
- 9: Sammelleitung
- 10: Teiladsorber

## Patentansprüche

1. Adsorptionsvorrichtung (1) zur Sicherung einer Wärmepumpe oder einer Kühl- oder Gefriereinrichtung,
- die mit einem entzündlichen oder gefährlichen Kältemittel betrieben wird,
- und die in einem Gehäuse installiert ist,
- wobei das Gehäuse geeignet für eine Aufstellung innerhalb eines Gebäudes ist, die Adsorptionsvorrichtung aufweisend
- mindestens einen Auslass (3) für Luft, der mit der Umgebung des Gehäuses verbunden ist,
- mindestens ein Festbett,
**dadurch gekennzeichnet, dass**
- eine Vielzahl von Einlässen (2) für ein Luft-Gasgemisch, die mit dem Inneren des Gehäuses verbunden sind, vorgesehen wird,
- die Adsorptionsvorrichtung (1) aus Teiladsorbern (4, 6, 8, 10) gebildet wird, wobei die einzelnen Teile entweder durch Strukturierungen voneinander abgetrennt sind oder aus miteinander verbundenen Einzeladsorbern gebildet sind,
- mindestens eine verschließbare Einfüllöffnung und mindestens eine verschließbare Auslassöffnung für Adsorptionsmittel für jeden Teiladsorber (4, 6, 8, 10) vorgesehen sind,
- die Teiladsorber (4, 6, 8, 10) miteinander hydraulisch verbunden (5, 7, 9) sind.

2. Vorrichtung nach Anspruch 1, **dadurch gekennzeichnet, dass** das Verhältnis von Gaseintrittsfläche zu Luftauslassfläche der Adsorptionsvorrichtung (1) größer als 1, vorzugsweise größer als 10, und besonders bevorzugt größer als 100 ist.

3. Vorrichtung nach einem der Ansprüche 1 bis 5, **dadurch gekennzeichnet, dass** die Teiladsorber (4, 6, 8, 10) jeder für sich an den Innenseiten des Gehäuses angeordnet sind und durch einen gemeinsamen Einlass (2) für Gas hydraulisch verbunden sind.

4. Vorrichtung nach einem der Ansprüche 1 bis 3, **dadurch gekennzeichnet, dass** die Teiladsorber (4), die den Gaseinlass (2) bilden, als Faltenfilter ausgebildet sind, welche mit Adsorptionsmittel belegt sind.

5. Vorrichtung nach einem der Ansprüche 1 bis 3, **dadurch gekennzeichnet, dass** der Teiladsorber (10), der den Gasauslass (3) bildet, als ein Faltenfilter ausgebildet ist, der mit Adsorptionsmittel belegt ist.

6. Vorrichtung nach einem der Ansprüche 1 bis 5, **dadurch gekennzeichnet, dass** die Teiladsorber (4, 6, 8, 10) hintereinander oder parallel zueinander verschaltet werden und so gemeinsam die Adsorptionsvorrichtung (1) bilden.

7. Vorrichtung nach einem der Ansprüche 1 bis 6, **dadurch gekennzeichnet, dass** die Festbetten mit Schüttungen von Formkörperpellets gefüllt sind.

8. Vorrichtung nach einem der Ansprüche 1 bis 6, **dadurch gekennzeichnet, dass** die Festbetten mit Schüttungen von gebrochenen Gut gefüllt sind.

9. Vorrichtung nach einem der Ansprüche 1 bis 6, **dadurch gekennzeichnet, dass** die Festbetten mit Schüttungen mit Wabenkörpern gefüllt sind.

10. Vorrichtung nach einem der Ansprüche 1 bis 6, **dadurch gekennzeichnet, dass** die Festbetten mit porösen, mit Aktivkohle belegten Schaumstoffen befüllt sind.

11. Vorrichtung nach Anspruch 10, **dadurch gekennzeichnet, dass** das Adsorptionsmittel offenporigen, mit Aktivkohle belegten Polyurethanschaumstoff enthält.

12. Vorrichtung nach einem der Ansprüche 1 bis 10, **dadurch gekennzeichnet, dass** das Adsorptionsmittel eine Schüttung aus Aktivkohlepartikeln ist oder enthält.

13. Vorrichtung nach Anspruch 12, **dadurch gekennzeichnet, dass** die Aktivkohlepartikel ein Granulat oder ein Extrudat sind und Partikelabmessungen zwischen 0,1 und 15 Millimetern, vorzugsweise zwischen 1 und 5 Millimetern aufweisen.

14. Verfahren zur Abscheidung von entzündlichem oder gefährlichem Kältemittel, wobei das Kältemittel unbeabsichtigt und leckagebedingt aus dem geschlossenen Kältekreis ausgetreten und in das Innere eines in einem Gebäude aufgestellten Gehäuses einer Wärmepumpe oder in das Innere einer in einem Gebäude aufgestellten Maschine einer Kühl- und Gefriereinrichtung gelangt ist, mittels einer Adsorptionsvorrichtung, welche aufweist
- mindestens einen Auslass (3) für Luft, der mit der Umgebung des Gehäuses verbunden ist,
- mindestens ein Festbett,
- eine Vielzahl von Einlässen (2) für ein Luft-Gasgemisch, die mit dem Inneren des Gehäuses verbunden sind, vorgesehen wird,
- die Adsorptionsvorrichtung (1) aus Teiladsorbern (4, 6, 8, 10) gebildet wird, wobei die einzelnen Teile entweder durch Strukturierungen voneinander abgetrennt sind oder aus miteinander verbundenen Einzeladsorbern gebildet sind,
- mindestens eine verschließbare Einfüllöffnung und mindestens eine verschließbare Auslassöffnung für Adsorptionsmittel für jeden Teiladsorber (4, 6, 8, 10) vorgesehen sind,
- die Teiladsorber (4, 6, 8, 10) miteinander hydraulisch verbunden (5, 7, 9) sind, **dadurch gekennzeichnet, dass**
- das leckagebedingt kontaminierte Luft-Kältemittelgemisch von mindestens einem als Faltenfilter ausgebildeten Gaseinlass (2, 4) aufgenommen wird,
- das aufgenommene Luft-Kältemittelgemisch hydraulisch abgeglichen in Teiladsorber (4, 6, 8, 10) verteilt wird, welche hintereinander oder parallel zueinander verschaltet werden und dort das Kältemittel adsorptiv abgeschieden wird,
- nachfolgend das gereinigte Gas (3) über einen Gasauslass (10) in den Aufstellungsraum oder ins Freie geleitet wird.

15. Verfahren nach Anspruch 14, **dadurch gekennzeichnet, dass** das Adsorptionsmittel des Teiladsorbers 10 dazu verwendet wird, Luftschadstoffe und Wasserdampf aus der Umgebungsluft im Falle von Rückströmung oder Rückdiffusion abzuscheiden.
